# EUROPEAN PATENT SPECIFICATION

(11) **EP 1 973 767 B1**
(45) Date of publication and mention of the grant of the patent: **23.02.2011**
(21) Application number: 06701359.9
(22) Date of filing: 20.01.2006
(51) Int. Cl.: B60R 21/215, B60R 13/04, B60R 21/203

(54) **Improvements in or relating to an air-bag unit arrangement**
Verbesserungen an einer Airbageinheitsanordnung und diese betreffend
Agencement d'unité d airbag améliore

(43) Date of publication of application: 01.10.2008
(73) Proprietor: Autoliv Development AB, 447 83 Vårgårda (SE)
(72) Inventor: AICHEM, Peter, 71032 Aresing (DE); GULDE, Alexander, 85778 Haimhausen (DE); SVEDBERG, Fredrik, 81375 München (DE)
(74) Representative: Beattie, Alex Thomas Stewart
(86) International application number: PCT/SE2006/000079
(87) International publication number: WO 2007/084031

(56) References cited:
- EP-A- 0 688 701
- EP-A1- 1 362 749
- WO-A-2004/024510
- WO-A-2005/028251
- WO-A1-2005/016698
- DE-A1- 4 414 761
- DE-U1- 29 912 270
- US-A- 5 505 483
- US-A- 5 549 323
- US-A- 5 549 323
- US-A- 6 062 595
- US-A1- 2004 027 825

## Description

The present invention relates to an air-bag unit arrangement, and more particularly to an air-bag unit arrangement in which the air-bag unit forms part of the steering wheel or dashboard of a motor vehicle, wherein the air-bag unit may typically house a "front impact driver's air-bag" or "front impact passenger air-bag" to provide protection for a driver or passenger of a motor vehicle as appropriate during a frontal crash impact. Such an air-bag unit arrangement is known from DE 4414761 A according to the preamble of claim 1.

It is known to provide various back-lit displays within the cockpit of a motor vehicle. Such back-lit displays might take the form of a back-lit emblem, logo or other indicia and are typically located on the dashboard or steering wheel of the motor vehicle.

It has also become increasingly common, over recent years, to provide one or more "front impact air-bags" intended to provide a level of protection for the occupants of the motor vehicle during a frontal crash impact. Conventionally, such front impact air-bags have generally been divided into two types, namely driver air-bags (DABs) intended to protect the driver of the motor vehicle, and passenger air-bags (PABs) intended to protect the front-seat passenger of the motor vehicle. In each case, the air-bag is typically housed in an air-bag unit formed by an air-bag housing and air-bag cover. In the case of a DAB, the air-bag unit might typically take the form of a self-contained unit which is mounted to the steering wheel of a motor vehicle such that the air-bag cover is positioned above the hub of the steering wheel, thus forming part of the exterior surface of the steering wheel. In the case of a PAB, the air-bag cover might typically be formed as an integral part of the dashboard of the motor vehicle (in the region of the dashboard in front of a passenger of the vehicle), with the air-bag housing engaging the air-bag cover on the rearside of the dashboard; thus, the air-bag cover defines a portion of the front side of the dashboard. Generally, the air-bag cover is provided with so called "split-lines", so that on inflation of the air-bag, the air-bag cover may break in a pre-determined manner along the split-lines, so that the split-lines define a releasable deployment panel for opening an air-bag deployment aperture in the air-bag cover, permitting the air-bag to emerge and occupy an appropriate position upon inflation to provide a level of protection for the driver or passenger of the vehicle as appropriate.

It is often desired to locate a back-lit display on an air-bag cover, in particular on the air-bag cover of a DAB unit, where it has become customary to provide a back-lit "logo" or a Trade Mark of the vehicle manufacturer in the central part of the steering wheel of a vehicle.

A problem associated with conventional air-bag unit arrangements is that when a back-lit display is located on the air-bag cover, access to the light source underneath the back-lit display from the rear of the air-bag cover is very difficult and can often involve disassembly of the air-bag unit, which itself is difficult and costly. Moreover, it is undesirable to provide access to the light source beneath the back-lit display by making the back-lit display itself removable from airbag cover, because such a removable display might infer to a person buying the motor vehicle that the standard of workmanship in fitting the display to the air-bag cover was relatively poor, or even that the display was defective. Furthermore, removable displays can pose a danger in an accident situation because inflation of the air-bag could cause the display to become detached, thereby becoming a dangerous missile.

It is an object of the present invention to seek to provide an improved air-bag unit arrangement.

According to the present invention there is provided an air-bag unit arrangement comprising an air-bag cover incorporating a back-lit display, and an air-bag housing, the air-bag housing and air-bag cover together forming an air-bag unit, the arrangement further comprising a light source positioned remote from said back-lit display so as to be directly accessible from the exterior of the air-bag unit, and a light-guide configured to guide light emitted by the light source towards the region immediately behind the back-lit display, for illuminating the display, and the display is located on an air-bag deployment panel releasable along a split-line boundary for opening an air-bag deployment aperture in the cover, the light source being positioned outside the perimeter of the panel and the light-guide extending laterally beneath the deployment panel, wherein the light-guide is configured to guide light from the light source crossing underneath the perimeter of the deployment panel and further to allow a free release of the deployment panel along the split-line boundary. According to such an arrangement, effective illumination of the back-lit display via a remote light source is still achieved with the display located on an air-bag deployment panel and the light source positioned outside the perimeter of the deployment panel, whilst at the same time the specific configuration of the light-guide means that deployment of the air-bag can still occur substantially unhindered due to the free release of the deployment panel.

In a preferred embodiment, the deployment panel is an at least partially-detachable panel defined by the split-line boundary, and the light-guide extends between the display and the perimeter of the split-line boundary. Thus, as the light-guide extends between the display and the perimeter of the split-line boundary, and as such does not project beyond the split-line boundary, interference between the light-guide and the edges of the air-bag deployment aperture is prevented, ensuring a free release of the deployment panel and a consequent unhindered deployment of the air-bag. Conveniently, the light source is positioned laterally of the light guide such that light from the light source crosses underneath the splitline boundary and is directly incident upon the light guide.

According to a yet further preferred embodiment, the arrangement further comprises a second light-guide for guiding light emitted from the light source towards the first light-guide, the second light-guide extending between the light source and the split-line boundary such that the two light-guides are discontinuous across the split-line boundary. The discontinuity of the two light-guides across the split-line boundary ensures a free release of the deployment panel and consequent unhindered deployment of the air-bag.

Preferably, the releasable deployment panel is in the form of a door hingedly attached to the cover along a hinge line, the light-guide extending between the light source and display, across the hinge line, wherein the portion of the light-guide spanning the hinge line is flexible to allow hinged opening of the door. Preferably, the entire light guide is flexible. According to such an arrangement, a free release of the deployment panel may occur along the split-line boundary, and the door may subsequently open freely about the hinge line such that deployment of the air-bag may occur substantially unhindered.

Optionally, the light guide comprises a substantially rigid light guide potion beneath said display, and a flexible light guide portion attached to the rigid portion and extending between the rigid portion and the light source.

Preferably, the air-bag unit comprises an air-bag housing which engages with the cover to form a self-contained air-bag module. Conveniently, the air-bag module is mounted to a steering wheel for a motor vehicle such that the cover forms part of the external surface of the steering wheel at the region of the hub of said steering wheel. In a preferred embodiment, the cover is mounted for depression to activate a vehicle horn, and the light source is either mounted in fixed relation to every light-guide or, where the arrangement comprises a second light-guide, is alternatively mounted for relative movement with the second light-guide upon depression of the cover, said relative movement being along the longitudinal axis between the light source and second light-guide such as to maintain alignment of the light source and second light-guide. Thus, in each case alignment of the light source and a respective light-guide is maintained, despite depression of the air-bag cover, so that depression of the air-bag cover does not compromise illumination of the back-lit display.

Conveniently, the light source is positioned laterally of the light guide such that light from the light source crosses underneath the splitline boundary and is directly incident upon the light guide.

In a preferred embodiment, the airbag cover is part of the dashboard of a motor vehicle, the airbag unit further comprising an airbag housing located behind the dashboard and engaging with the cover.

In a preferred embodiment, the arrangement further comprises a diffusing arrangement configured for diffusing incident light emitted from the light source such that the light enters the region immediately behind the back-lit display in a diffused state.

Optionally, the diffuser arrangement comprises a diffuse reflector positioned beneath the back-lit display and oriented to reflect incident light into the region immediately behind the back-lit display.

Conveniently, the back-lit display is in the form of a back-lit emblem, logo or other indicia formed as a translucent plastic shell incorporating a thin, translucent coating of metal ions.

So that the invention may be readily understood and so that further features thereof may be appreciated, embodiments of the invention will now be described, by way of example, with reference to the accompanying drawings in which:
FIGURE 1, shows a cross sectional view of an air-bag unit arrangement according to a first embodiment of the present invention;
FIGURE 2, shows a cross sectional view illustrating a second embodiment of an air-bag unit arrangement according to the present invention;
FIGURE 3, shows a cross sectional view of a third embodiment of an air-bag unit arrangement according to the present invention;
FIGURE 4, shows a cross sectional view illustrating a fourth embodiment of an air-bag unit arrangement according to the present invention; and
FIGURE 5, shows a cross sectional view illustrating part of a fifth embodiment of an air-bag arrangement according to the present invention.

It is to be noted that, simply for the sake of convenience, the invention will now be described in relation specifically to a self-contained airbag module, such as may be mounted to the steering wheel of a motor vehicle to house a "driver's airbag". However, the invention is not intended to be limited to self-contained driver airbag modules specifically and, for example, is intended to include passenger airbag unit arrangements, for example where the airbag unit is formed from an airbag cover and airbag housing, with the airbag cover being part of the dashboard of a vehicle. The following teaching applies equally to such passenger airbag unit arrangements.

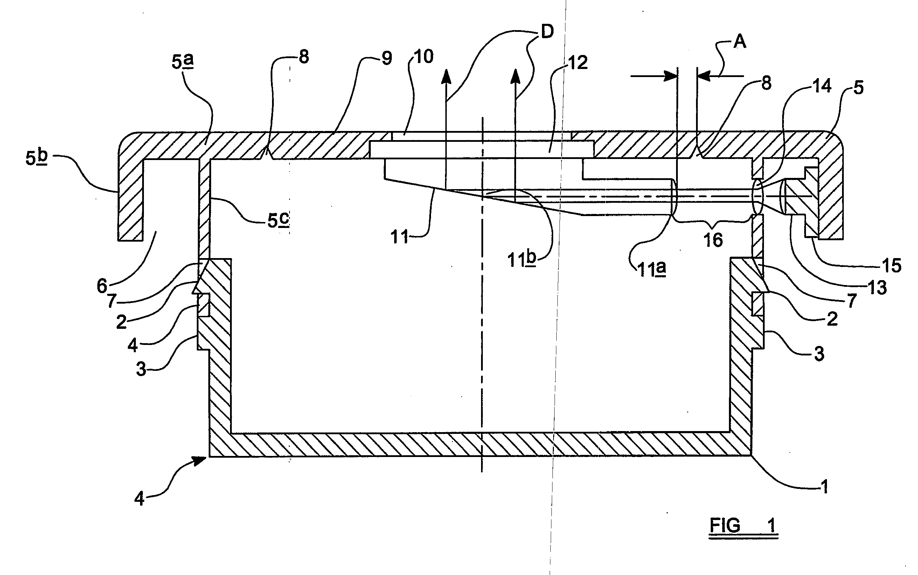

Figure 1 shows an air-bag unit arrangement comprising an air-bag housing in the form of an open ended container 1 having a generally u-shaped cross section as viewed in Figure 1, the container 1 incorporating a series of bevelled lip sections 2 (of which only two can be seen in Figure 1) and a respective series of outwardly directed stop flanges 3 (again, of which only two can be seen in Figure 1) spaced below the respective lip sections 2 to define a corresponding series of locking grooves 4.

The air-bag unit arrangement further comprises an air-bag cover 5 incorporating a generally planar cover portion 5a, a downwardly depending outer skirt portion 5b depending from the edge of the cover portion 5a, and an inner skirt portion 5c, extending downwardly beyond the edge of the outer skirt portion 5b and spaced inwardly of the outer skirt portion 5b to define a channel 6 immediately beneath the cover portion 5a, around its periphery.

A series of slots 7 (of which only two can be seen in Figure 1) are cut out of the inner skirt portion 5c, in the region of the lower end thereof, each slot 7 being configured to receive a respective bevelled lip section 2, the air-bag cover 5 and air-bag housing 1 thus engaging one another in the manner of a conventional "snap-fit" to form an air-bag unit and, more particularly, a self-contained air-bag module (indicated generally at 4).

Typically, the air-bag module 4 will house a suitable air-bag, inflator and possibly also trigger electronics (not shown).

Referring again to Figure 1, the air-bag cover 5 is provided with predefined "split-lines" 8, being lines of relative mechanical weakness in the air-bag cover 5, the split-lines in this case being formed by cutting grooves of triangular cross-section in the underside of the air-bag cover 5. The split-lines 8 together form a split-line boundary which defines a detachable panel 9, the detachable panel 9 effectively constituting an air-bag deployment panel which is releasable along the split-line boundary, for example on triggering of the air-bag in the event of a crash impact, to open an air-bag deployment aperture in the air-bag cover 5.

A back-lit display 10 is located at the centre of the detachable panel 9, the back-lit display 10 being mounted in a recess formed in the upper surface of the detachable panel 9 so as to sit "flush" with the upper surface of the detachable panel 9, in an aesthetically pleasing manner.

The back-lit display 10 may take the form of, for example a back-lit emblem, logo or other indicia, and may comprise a translucent plastic shell incorporating a thin, translucent coating of metal ions. Specifically, the coating of metal ions may be applied to the inner or outer surface of the plastic shell and may be deposited on the surface of the plastic- shell using conventional physical vapour deposition or sputtering techniques. Preferably, the coating of metal ions has a thickness of around 100nm but, in any event, the coating of metal ions is sufficiently thin so that the logo or emblem appears metallic when not back-illuminated, but which is nevertheless sufficiently translucent to allow back-illumination.

A light-guide 11 (the vertical dimension of which has been greatly exaggerated in Figure 1 for the purposes of clarity) is mounted to the underside of the detachable panel 9, directly underneath the back-lit display 10, the light-guide extending laterally beneath the detachable panel 9 between the back-lit display 10 and the perimeter of the split-line boundary defined by the split-lines 8 (such that the distance A in Figure 1 is greater than or equal to zero). The light-guide 11 is configured to receive light incident on the input end 11 a and to guide such incident light towards the region 12 immediately behind the back-lit display 10.

A light source 13 is mounted on the inside of the outer skirt portion 5b of the air-bag cover 5, the light source 13 being aligned with the input end 11 a of the light-guide 11 through an aperture 14 in the inner skirt portion 5c. The light source 13 is operably connected to electronics 15 configured to control the operation of the light source in a predetermined manner in response to input signals; the electronics 15 are shown only schematically as a "black box" in Figure 1, but it will be appreciated that such electronics might take the form of, for example, a printed circuit board (PCB) connected to external electronics and/or sensors within the motor vehicle (not shown).

An optical arrangement is provided between the light source 13 and the input end 11a of the light-guide 11, the optical arrangement being in the specific form of a composite lens system 16 configured to focus light emitted by the light source 13, for efficient transmission between the light source 13 and the input end 11a of the light-guide 11, and to subsequently direct the light into the light-guide 11. It will be appreciated that various conventional composite lens systems might be employed in order to ensure effective, efficient transmission of the light between the light source 13 and input end 11 a of the light-guide 11, whilst minimising "boundary losses" within the light-guide 11.

It will be appreciated, referring to Figure 1, that the air-bag unit arrangement comprises a light source which is positioned remote from the back-lit display, and a light-guide which is configured to guide light emitted by the light source (indicated by D in Figure 1) towards the region immediately behind the back-lit display, for illuminating the display. Moreover, it will be appreciated that the light source is directly accessible from the exterior of the air-bag unit, that is the light source can be accessed (for example for replacement or repair) without disassembling the air-bag unit (by disengaging the air-bag cover 5 from the air-bag housing 1) and without removing the back-lit display from the air-bag cover.

It will further be appreciated that, as the light-guide 11 extends between the back-lit display 10 and the perimeter of the split-line boundary defined by the split-lines 8, the detachable panel 9 is free to release along the split-line boundary, upon deployment of the air-bag, without the light-guide 11 interfering with detachment of the detachable panel 9, for example by catching on the remaining portion of the air-bag cover 5. Thus, the arrangement shown in Figure 1 still allows safe deployment of the air-bag in a crash situation, ensuring that the driver (or passenger) of the vehicle is protected as far as possible.

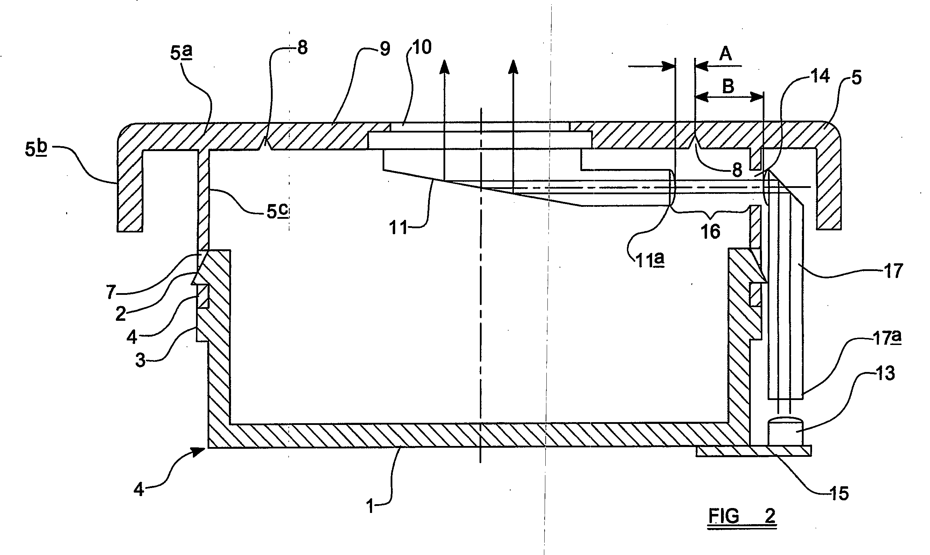

Referring now to Figure 2, an alternative embodiment of an air-bag unit arrangement is shown. The air-bag unit arrangement shown in Figure 2 is similar in many respects to the air-bag unit arrangement shown in Figure 1 and, for the sake of conciseness, like numerals have been used to denote like features.

The embodiment shown in Figure 2 differs from the embodiment shown in Figure 1 in that the light source 13 (and corresponding electronics 15) is positioned adjacent the base of the air-bag unit 4, so that the light source 13 is no longer aligned with the light-guide 11 (specifically, the input end 11 a of the light-guide 11). A second light-guide 17 is provided extending between the light source 13 and the split-line boundary defined by the split-lines 8 such that the second light-guide 17 is discontinuous with the first light-guide 11, across the split-line boundary, the light-guide 17 being configured to guide incident light, emitted from the light source 13 into the input end 11 a of the light-guide 11. In similar manner to the embodiments shown in Figure 1, an optical arrangement 16 is provided between the second light-guide 17 and first light-guide 11, to ensure efficient transmission of light between the two light-guides whilst minimising boundary losses within the light-guide 11.

The second light-guide 17 is shown only schematically in Figure 2, but it is envisaged that the light-guide 17 might be conveniently mounted to either the air-bag housing 1 or the air-bag cover 5, or both. Alternatively, the light-guide 17 might be mounted to some other element of a motor vehicle, for example the steering wheel (not shown) or dashboard (not shown) of the vehicle. Similarly, the light source 13 might be mounted to the air-bag housing 1 (for example via the electronics 15 as shown in Figure 2), or the air-bag cover 5, or again some external component of a motor vehicle (not shown).

It will be appreciated that the air-bag unit arrangement shown in Figure 2 comprises a light source which is remote from the back-lit display, but which nevertheless ensures that light emitted from the light source is guided towards the region immediately behind the back-lit display. In particular, the light-guide extends laterally beneath the deployment panel and is configured to guide light from the light source crossing underneath the perimeter of the deployment panel. Moreover, it will be appreciated once again that the light source is positioned so as to be directly accessible from the exterior of the air-bag unit, that is without disengaging the air-bag housing 1 from the air-bag cover 5 and without disengaging the back-lit display 10 from the air-bag cover 5.

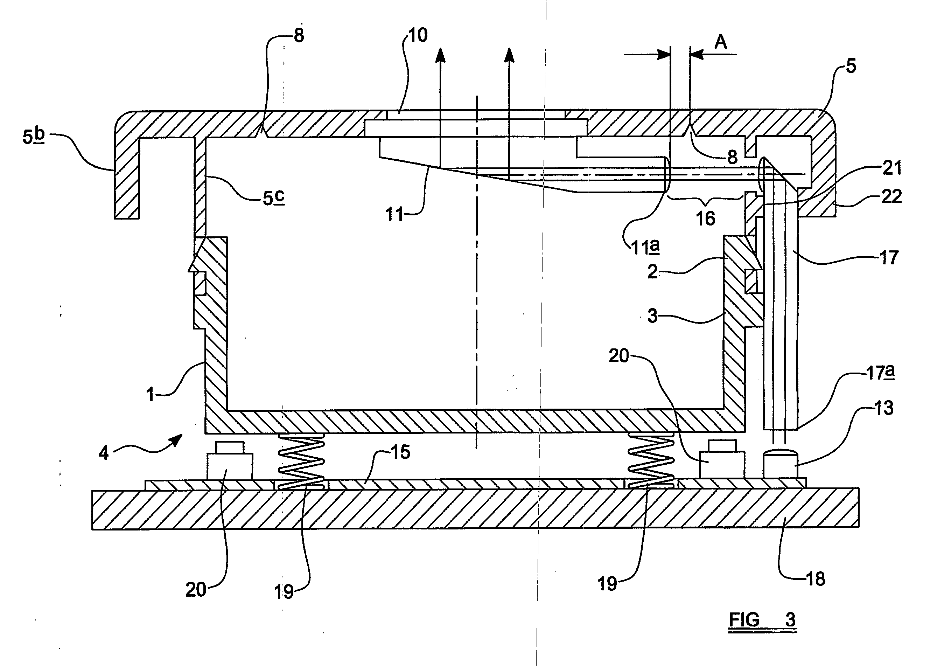

It will also be appreciated that, due to the discontinuity between the second light-guide 17 and the first light-guide 11, across the split-line boundary defined by the split-lines 8, the detachable panel 9 may release freely along the split-line boundary without the light-guides interfering with such release, for example by catching on the air-bag cover 5 (in the case of light-guide 11) or catching on the detachable panel 9 (in the case of the light-guide 17). Thus, the air-bag unit arrangement shown in Figure 2 allows safe deployment of the air-bag to protect the driver (or passenger) of a vehicle as far as possible. Referring now to Figure 3, a yet further air-bag unit arrangement according to the present invention is shown. The embodiment shown in Figure 3 is similar in many respects to the embodiments shown in Figures 1 and 2 and therefore, for the sake of clarity, like numerals have been used to denote like features.

The embodiment shown in Figure 3 differs from the embodiment shown in Figure 2 in that the air-bag module 4 and is mounted to a section 18 of a motor vehicle steering wheel (not shown), such that the air-bag cover 5 forms part of the external surface of the steering wheel in the region of the hub of the steering wheel.

The air-bag module 4 is mounted on a plurality of coil springs 19 (of which only two are shown in Figure 3) and a plurality of horn switches 20 (again, of which only two are shown in Figure 3) are mounted to the section 18 of the steering wheel, below the base of the air-bag module 4, in the region of the outer edge thereof. Upon sufficient compression of the coil springs 19, for example by pressing downwardly on the cover 5, the base of the air-bag module 4 will contact the horn switches 20 to activate the vehicle horn. Thus, it will be appreciated that the air-bag module 4, and therefore the air-bag cover 5, is mounted for depression to activate a vehicle horn.

Referring again to Figure 3, the light source 13 is mounted to the steering wheel section 18, adjacent the base of the air-bag module 4, and below a lip section 2 and stop flange 3 on the container 1. In contrast to the previous illustrated embodiments, the stop flange 3 located above the light source 13 extends outwardly beyond the respective bevelled lip 2, and the inner skirt portion 5c of the air-bag cover 5 further incorporates an outwardly extending mounting flange portion 21, aligned with the extended stop flange 3 to define a vertical mounting surface for the second light-guide 17. The outer skirt portion 5b of the air-bag cover 5 further incorporates an inwardly directed mounting flange 22, opposite the mounting flange 21 and the light-guide 17 is thus secured in a vertical alignment between, on the one hand, the mounting flange 21 and stop flange 3 and, on the other hand, the mounting flange 22, for example by gluing. Thus, the light-guide 17 is maintained in fixed vertical alignment with the light source 13.

Comparing Figures 3 and 2, it will be noted that, in Figure 3, the input end 17a of the light-guide 17 is spaced sufficiently from the light source 13 such that, upon movement of the air-bag module 4 (against the bias of compression springs 19), the light-guide 17 is free to move relative to the light source 13, with such relative movement being constrained, by the fixed mounting of the light-guide 17, along the (vertical) longitudinal axis between the light-guide 17 and the light source 13. Thus, it will be appreciated that in the arrangement shown in Figure 3, comprising two light-guides, the light source and light-guide 17 are mounted for relative movement with respect to one another upon depression of the air-bag cover 5, with such relative movement being along (vertical) longitudinal axis between the light source 13 and light-guide 17, so as to maintain alignment of the light source 13 and light-guide 17. In this manner, alignment of the light source 13 and light-guide 17 is maintained upon depression of the cover (assuming a substantially uniform compression of the compression springs 19) so that the back-lit display may be illuminated by the light source 13, via the light-guide 17 and light-guide 11, even when the air-bag cover is being depressed to activate a vehicle horn.

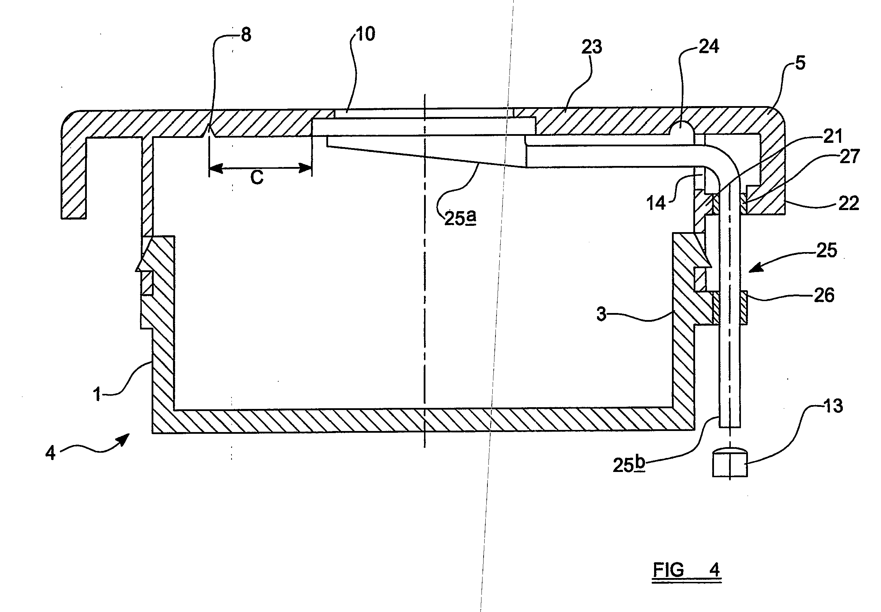

Figure 4 shows a further air-bag unit arrangement according to the present invention.

In contrast to the embodiments shown in Figures 1 to 3, the air-bag unit arrangement shown in Figure 4 comprises a releasable deployment panel in the form of a door 23 hingedly attached to the air-bag cover 5 by means of a "living" hinge 24 defining a hinge line (into the page in Figure 4). A light-guide 25 is provided extending between the light source 13 and the split-line boundary defined by the split-lines 8 (in the sense that the distance C is greater than or equal to zero), across the hinged line defined by the hinge 24. The light guide 25 comprises a rigid light-guide portion 25a located beneath the back-lit display 10, and a flexible light-guide portion 25b, the flexible light-guide portion 25b being attached to the rigid light-guide portion 25a and extending between the rigid portion 25a and the light source 13. Thus, the portion of the light-guide spanning the hinge line defined by hinge 24 is flexible, and it will be appreciated that this flexible portion will allow opening of the door 23 and subsequent pivoting movement of the door 23 about the hinge 24.

The flexible light-guide portion 25b is mounted to the air-bag housing 1 and air-bag cover 5 by means of resilient clips 26 and 27 mounted respectively on the (extended) stop flange 3 and mounting flanges 21 and 22.

It will be appreciated that, in the arrangement shown in Figure 4, the light source is positioned remote from the back-lit display 10, and the light-guide is configured to guide light emitted by the light source towards the region immediately behind the back-lit display; in particular, the light-guide extends laterally beneath the deployment panel and is configured to guide light from the light source crossing underneath the perimeter of the deployment panel. Moreover, it will be appreciated that, as the light-guide 24 extends underneath the "living" hinge 24 of the door 23, the light-guide is configured to allow a free release of the deployment panel along the split-line boundary. Thus, upon deployment of the air-bag, the door 23 is free to release along the split-line boundary, without interference from the light-guide 25, with the door subsequently being able to pivot about the hinge 24, due to flexible portion of the light-guide 25, to allow a safe deployment of the air-bag.

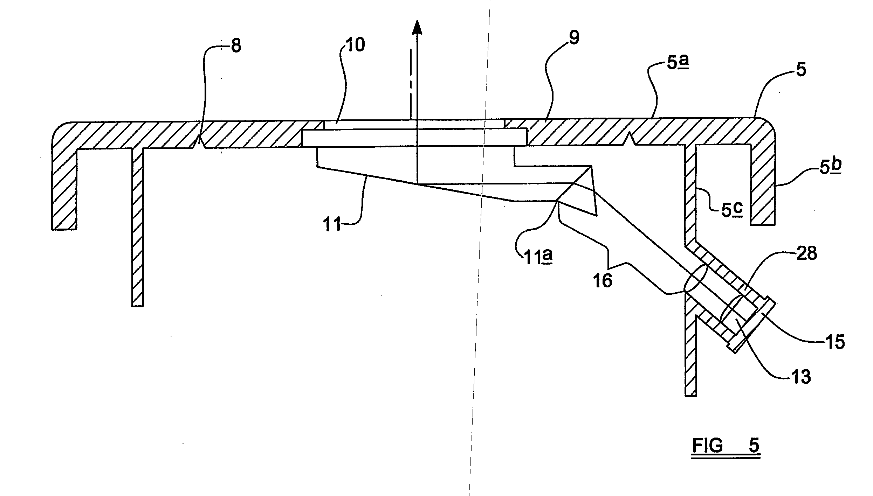

Referring now to Figure 5, part of a further air-bag unit arrangement according to the present invention is shown, in which the light source 13 is mounted within an outwardly and downwardly extending channel 28 formed in the inner skirt portion 5c, the channel 28 being angled with respect to the inner skirt portion 5c such that the light source 13 is aligned with the light-guide 11 (more specifically the input end 11 a of the light-guide 11). Alternatively, the channel 28 might be formed in the airbag housing 1.

It will be appreciated, referring to Figure 5, that in the arrangement shown, the light source is positioned remote from the back-lit display and the light-guide is configured to guide light emitted by the light source towards the region immediately behind the back-lit display; more specifically, it will be appreciated that the light-guide extends laterally beneath the deployment panel and is configured to guide light from the light source crossing underneath the perimeter of the deployment panel.

Moreover, it will be appreciated that, because the light-guide extends between the back-lit display and perimeter of the split-line boundary defined by the split-lines 8, the arrangement allows a free release of the deployment panel, for example upon deployment of the air-bag, along the split-line boundary, without the light-guide 11 interfering with the release of the deployment panel, for example by catching on the air-bag cover 5.

Lastly, it will be appreciated that, in the arrangement shown in Figure 5, the light source remains directly accessible from the exterior of the air-bag unit, in that the light source may be accessed (for replacement or repair, for example) without disengaging the air-bag cover 5 from the air-bag housing 1 and without disengaging the back-lit display 10 from the air-bag cover 5.

Referring to Figures 1 to 5 and the foregoing description, it will be appreciated that various aspects of the specific embodiments could be combined. In particular, it is envisaged that, in the arrangement shown in Figure 1, the air-bag module 4 might be combined with the vehicle horn mounting arrangement shown in Figure 3. Here, it is noted that because the light source is mounted in fixed relation to the light-guide 11, movement of the air-bag module 4 (against the bias of the compression springs 19) will not affect the alignment of the light source 13 and light-guide 11, so that the back-lit display can remain illuminated even on depression of the air-bag cover 5, in similar manner to the arrangement shown in Figure 3.

As regards relative positions of the second light-guide 17 and light source 13, it is envisaged that these elements may be mounted in all manner of different positions and orientations whilst still retaining some or all of the advantages of the illustrated arrangements. In particular, referring to Figure 2, it will be appreciated that there is scope for great design flexibility in the mounting of the light-guide 17 and light source 13, provided that the light-guide 17 is discontinuous across the split-line boundary with the other light-guide 11 and is nevertheless configured to guide light from the light source 13 into the light-guide 11. It is specifically envisaged that the light source 13 and light-guide 17 might each be mounted either on a wall of the air-bag housing or to the air-bag cover, or to the steering wheel.

With specific reference to Figure 4, it is envisaged that the light-guide 25 might consist entirely of a flexible portion extending between the back-lit display 10 and the light source 13.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air-bag unit arrangement comprising an air-bag cover (5) incorporating a back-lit display (10) and an air-bag housing (1), the air-bag housing (1) and an air-bag cover (5) together forming an air-bag unit (4), the arrangement further comprising a light source (3) positioned remote from said back-lit display (10) so as to be directly accessible from the exterior of the airbag unit (4), and a light-guide configured to guide light (11) emitted by the light source (13) towards the region immediately behind the back-lit display (10), for illuminating the display (10), wherein the display (10) is located on an airbag deployment panel (9) which is releasable along a splitline boundary for opening an airbag deployment aperture in the cover (5) **characterised by** that, the light source (13) being positioned outside the perimeter of the deployment panel (9) and the light guide (11) extending laterally beneath the deployment panel (9), wherein the light guide (11) is configured to receive incident light from the light source (13) crossing underneath the perimeter of the deployment panel (9) and further to further allow a free release of the deployment panel (9) along the splitline boundary.

2. An arrangement according to claim 1, wherein the deployment panel (9) is an at least partly-detachable panel defined by said splitline boundary, and the light guide (11) extends between the display (10) and the perimeter of the splitline boundary.

3. An arrangement according to claim 2, wherein the light source (13) is positioned laterally of the light guide (11) such that light from the light source (13) crosses underneath the splitline boundary and is directly incident upon the light guide (11).

4. An arrangement according to claim 2 or 3, wherein the arrangement further comprises a second light guide (17) configured for guiding light from the light source (13) into the first light guide (11), the second light guide (17) extending between the light source (13) and the splitline boundary such that the two light guides (11, 17) are discontinuous across the splitline boundary.

5. An arrangement according to claim 1, wherein the releasable deployment panel is in the form of a door (23) hingedly attached to the cover (5) along a hinge-line (24), the light guide extending between the light source (13) and display (10), across the hinge line (24), wherein the portion of the light guide spanning the hinge-line (24) is flexible to allow hinged opening of the door (23).

6. An arrangement according to claim 5, wherein the entire light guide (24) is flexible.

7. An arrangement according to claim 5, wherein the light guide comprises a substantially rigid light guide portion (25a) beneath said display (10), and a flexible light guide portion (25b) attached to the rigid portion (25a) and extending between the rigid portion and the light source (13).

8. An arrangement according to any preceding claim, wherein the cover (5) is part of the dashboard of a motor vehicle, the airbag unit further comprising an airbag housing (1) located behind the dashboard and engaging with the cover (5).

9. An arrangement according to any of claims 1 to 7, wherein the airbag unit comprises an airbag housing which engages with the cover (5) to form a self-contained airbag module (4).

10. An arrangement according to claim 9, wherein the airbag module (4) is mounted to a steering wheel (18) for a motor vehicle such that the cover (5) forms part of the external surface of the steering wheel in the region of the hub of said steering wheel.

11. An arrangement according to claim 10, wherein the cover (5) is mounted for depression to activate a vehicle horn, and wherein the light source (13) is either mounted in fixed relation to the or each light guide or, where the arrangement comprises said second light guide (17), is alternatively mounted for relative movement with the second light guide (17) upon depression of the cover (5), said relative movement being along the longitudinal axis between the light source (13) and second light guide (17) so as to maintain alignment of the light source (13)and second light guide (17).

12. An arrangement according to any one of claims 7 to 11, wherein the light source (13) is mounted to a wall of the airbag housing (1).

13. An arrangement according to any one of claims 7 to 11, wherein the light source (13) is mounted to the cover (5).

14. An arrangement according to any one of claims 7 to 11 wherein the light source (13) is mounted to the steering wheel (18).

15. An arrangement according to any one of claims 7 to 14, wherein the second light guide (17) is mounted to the housing (1).

16. An arrangement according to any one of claims 7 to 14, wherein the second light source (17) is mounted to the cover (5).

17. An arrangement according to any one of claims 7 to 14, wherein the second light guide (17) is mounted to the steering wheel (18).

18. An arrangement according to any preceding claim, wherein the arrangement further comprises a diffusing arrangement configured for diffusing incident light emitted from the light source (13) such that the light enters the region immediately behind the back-lit display (10) in a diffused state.

19. An arrangement according to claim 18, wherein the diffusing arrangement comprises a diffuse reflector positioned beneath the back-lit display (10) and oriented to reflect incident light into the region immediately behind the back-lit display (10).

20. An arrangement according to any preceding claim, wherein the back-lit display (10) is in the form of a back-lit emblem, logo or other indicia formed as a translucent plastic shell incorporating a thin, translucent coating of metal ions.

## Patentansprüche

1. Airbageinheitsanordnung, die eine Airbagabdeckung (5) umfasst, die ein hintergrundbeleuchtetes Display (10) enthält, und ein Airbaggehäuse (1), wobei das Airbaggehäuse (1) und eine Airbagabdeckung (5) zusammen eine Airbageinheit (4) bilden, wobei die Anordnung ferner eine Lichtquelle (3) umfasst, die entfernt vom genannten hintergrundbeleuchteten Display (10) positioniert ist, um vom Außenbereich der Airbageinheit (4) direkt zugänglich zu sein, und einen Lichtleiter, der ausgeführt ist, um von der Lichtquelle (13) ausgesendetes Licht (11) hin zum Bereich unmittelbar hinter dem hintergrundbeleuchteten Display (10) zu leiten, um das Display (10) zu beleuchten, wobei das Display (10) auf einer Airbagauslösungsplatte (9) angeordnet ist, die entlang einer Sollbruchliniengrenze lösbar ist, um eine Airbagauslösungsöffnung in der Abdeckung (5) zu öffnen, **dadurch gekennzeichnet, dass** die Lichtquelle (13) außerhalb des Umfangs der Auslösungsplatte (9) positioniert ist und der Lichtleiter (11) seitlich unterhalb der Auslösungsplatte (9) verläuft, wobei der Lichtleiter (11) ausgeführt ist, um einfallendes Licht von der Lichtquelle (13) zu empfangen, die quer unterhalb des Umfangs der Auslösungsplatte (9) verläuft, und ferner um ferner ein freies Lösen der Auslösungsplatte (9) entlang der Sollbruchliniengrenze zu ermöglichen.

2. Anordnung nach Anspruch 1, wobei die Auslösungsplatte (9) eine mindestens zum Teil lösbare Platte ist, die von der genannten Sollbruchliniengrenze definiert wird, und der Lichtleiter (11) zwischen dem Display (10) und dem Umfang der Sollbruchliniengrenze verläuft.

3. Anordnung nach Anspruch 2, wobei die Lichtquelle (13) seitlich des Lichtleiters (11) positioniert ist, so dass Licht von der Lichtquelle (13) unterhalb der Sollbruchliniengrenze quer verläuft und auf den Lichtleiter (11) direkt einfällt.

4. Anordnung nach Anspruch 2 oder 3, wobei die Anordnung ferner einen zweiten Lichtleiter (17) umfasst, der ausgeführt ist, um Licht von der Lichtquelle (13) in den ersten Lichtleiter (11) zu leiten, wobei der zweite Lichtleiter (17) zwischen der Lichtquelle (13) und der Sollbruchliniengrenze verläuft, so dass die zwei Lichtleiter (11, 17) über die Sollbruchliniengrenze hinweg diskontinuierlich sind.

5. Anordnung nach Anspruch 1, wobei die lösbare Auslösungsplatte die Form einer Tür (23) hat, die klappbar an der Abdeckung (5) entlang einer Scharnierlinie (24) angebracht ist, wobei der Lichtleiter zwischen der Lichtquelle (13) und dem Display (10) verläuft, über die Scharnierlinie (24) hinweg, wobei der sich über die Scharnierlinie (24) erstreckende Teil des Lichtleiters biegsam ist, um ein Öffnen der Tür (23) durch Klappen zu ermöglichen.

6. Anordnung nach Anspruch 5, wobei der gesamte Lichtleiter (24) biegsam ist.

7. Anordnung nach Anspruch 5, wobei der Lichtleiter einen im Wesentlichen unbiegsamen Lichtleiterteil (25a) unterhalb des genannten Displays (10) und einen biegsamen Lichtleiterteil (25b) umfasst, der am unbiegsamen Teil (25a) angebracht ist und zwischen dem unbiegsamen Teil und der Lichtquelle (13) verläuft.

8. Anordnung nach einem vorhergehenden Anspruch, wobei die Abdeckung (5) Teil des Armaturenbretts eines Kraftfahrzeugs ist, wobei die Airbageinheit ferner ein Airbaggehäuse (1) umfasst, das sich hinter dem Armaturenbrett befindet und in die Abdeckung (5) eingreift.

9. Anordnung nach einem der Ansprüche 1 bis 7, wobei die Airbageinheit ein Airbaggehäuse (1) umfasst, das in die Abdeckung (5) eingreift, um ein in sich geschlossenes Airbagmodul (4) zu bilden.

10. Anordnung nach Anspruch 9, wobei das Airbagmodul (4) an einem Lenkrad (18) für ein Kraftfahrzeug montiert ist, so dass die Abdeckung (5) einen Teil der Außenfläche des Lenkrads im Bereich der Nabe des genannten Lenkrads bildet.

11. Anordnung nach Anspruch 10, wobei die Abdeckung (5) zum Niederdrücken zur Aktivierung einer Fahrzeughupe montiert ist und wobei die Lichtquelle (13) entweder in fester Beziehung zu dem oder jedem Lichtleiter montiert ist oder, wenn die Anordnung den genannten zweiten Lichtleiter (17) umfasst, alternativ für eine Relativbewegung mit dem zweiten Lichtleiter (17) beim Niederdrücken der Abdeckung (5) montiert ist, wobei die genannte Relativbewegung entlang der Längsachse zwischen der Lichtquelle (13) und dem zweiten Lichtleiter (17) verläuft, um die Ausrichtung der Lichtquelle (13) und des zweiten Lichtleiters (17) aufrechtzuerhalten.

12. Anordnung nach einem der Ansprüche 7 bis 11, wobei die Lichtquelle (13) an einer Wand des Airbaggehäuses (1) montiert ist.

13. Anordnung nach einem der Ansprüche 7 bis 11, wobei die Lichtquelle (13) an der Abdeckung (5) montiert ist.

14. Anordnung nach einem der Ansprüche 7 bis 11, wobei die Lichtquelle (13) am Lenkrad (18) montiert ist.

15. Anordnung nach einem der Ansprüche 7 bis 14, wobei der zweite Lichtleiter (17) am Gehäuse (1) montiert ist.

16. Anordnung nach einem der Ansprüche 7 bis 14, wobei die zweite Lichtquelle (17) an der Abdeckung (5) montiert ist.

17. Anordnung nach einem der Ansprüche 7 bis 14, wobei der zweite Lichtleiter (17) am Lenkrad (18) montiert ist.

18. Anordnung nach einem vorhergehenden Anspruch, wobei die Anordnung ferner eine Diffusionsanordnung umfasst, die ausgebildet ist, um von der Lichtquelle (13) ausgesendetes einfallendes Licht zu diffundieren, so dass das Licht in den Bereich unmittelbar hinter dem hintergrundbeleuchteten Display (10) in einem diffundierten Zustand eintritt.

19. Anordnung nach Anspruch 18, wobei die Diffusionsanordnung einen Diffusionsreflektor umfasst, der unterhalb des hintergrundbeleuchteten Displays (10) positioniert und orientiert ist, um einfallendes Licht in den Bereich unmittelbar hinter dem hintergrundbeleuchteten Display (10) zu reflektieren.

20. Anordnung nach einem vorhergehenden Anspruch, wobei das hintergrundbeleuchtete Display (10) die Form eines hintergrundbeleuchteten Emblems, Logos oder anderen Kennzeichens hat, das als transluzente Plastikschale ausgebildet ist, die eine dünne, lichtdurchlässige Schicht aus Metallionen enthält.

## Revendications

1. Une installation d'unité d'airbag (5) comprenant un couvercle d'airbag (5) incorporant un écran rétro-éclairé (10) et un boîtier d'airbag (1), le boîtier d'airbag (1) et le couvercle d'airbag (5) formant ensemble un système d'airbag (4), l'installation comprenant également une source de lumière (3) positionnée à distance du dit écran rétro-éclairé (10) afin d'être directement accessible de l'extérieur du système d'airbag (4), ainsi qu'un guide de rayon lumineux configuré pour guider le rayon lumineux (11) émis par la source de lumière (13) vers la zone se trouvant juste derrière l'écran rétro-éclairé (10), afin d'éclairer l'écran (10), dans lequel l'écran (10) est situé sur le panneau d'ouverture de l'airbag (9) ouvrable selon une ligne de séparation pour libérer un panneau d'ouverture de l'airbag situé dans le couvercle (5) **caractérisé par le fait que** la source de lumière (13) est située hors du périmètre du panneau d'ouverture (9) et **par le fait que** le guide de rayon lumineux (11) se situe sur le côté et en dessous du panneau d'ouverture (9), dans lequel le guide de rayon lumineux (11) est configuré pour recevoir le reflet de la source de lumière (13) par le dessous du périmètre du panneau d'ouverture (9) et au delà pour permettre la libération du panneau d'ouverture (9) selon la ligne de séparation.

2. Une installation selon la revendication 1, dans laquelle le panneau d'ouverture (9) est constitué d'au moins un panneau en partie détachable défini par la dite ligne de séparation et dans laquelle le guide de rayon lumineux (11) s'étend entre l'écran (10) et le périmètre de la ligne de séparation.

3. Une installation selon la revendication 2, dans laquelle la source de lumière (13) est positionnée sur le côté du guide de rayon lumineux (11) de telle façon que la lumière émise par la source de lumière (13) traverse la ligne de séparation par le dessous et se reflète directement sur le guide de rayon lumineux (11).

4. Une installation selon la revendication 2 ou 3, dans laquelle l'installation comprend également un second guide de rayon lumineux (17) configuré pour guider la lumière à partir de la source de lumière (13) vers le premier guide de rayon lumineux (11), le second guide de rayon lumineux (17) s'étendant entre la source de lumière (13) et la ligne de séparation de telle façon que les deux guides de rayon lumineux (11, 17) soient discontinus de part et d'autre de la ligne de séparation

5. Une installation selon la revendication 1, dans laquelle le panneau d'ouverture libérable a la forme d'une porte (23) attachée par des gonds au couvercle (5) le long d'une charnière (24), le guide de rayon lumineux s'étendant entre la source de lumière (13) et l'écran (10), de part et d'autre de la charnière (24), dans laquelle la portion du guide de rayon lumineux couvrant la charnière (24) est flexible to pour permettre une ouverture sur gonds de la porte (23).

6. Une installation selon la revendication 5, dans laquelle la totalité du guide de rayon lumineux (24) est flexible.

7. Une installation selon la revendication 5, dans laquelle le guide de rayon lumineux comprend une portion assez rigide (25a) en dessous du dit écran (10), et une portion flexible (25b) fixée à la portion rigide (25a) et s'étendant entre la portion rigide et la source de lumière (13).

8. Une installation selon l'une quelconque des revendications précédentes, dans laquelle le couvercle (5) fait partie du tableau de bord d'un véhicule motorisé, le système d'airbag comprenant également un boîtier d'airbag (1) situé derrière le tableau de bord et s'engageant dans le couvercle (5).

9. Une installation selon l'une quelconque des revendications 1 à 7, dans laquelle le système d'airbag comprend un compartiment airbag qui s'engage dans le couvercle (5) pour constituer un module to indépendant d'airbag (4).

10. Une installation selon la revendication 9, dans laquelle le module d'airbag (4) est monté sur le volant (18) d'un véhicule à moteur de telle façon que le couvercle (5) constitue une partie de la surface extérieure du volant dans la zone du pignon dudit volant.

11. Une installation selon la revendication 10, dans laquelle le couvercle (5) est monté pour activer un klaxon par pression et dans laquelle la source de lumière (13) est, soit fixée sur le ou sur chaque guide de rayon lumineux, et comprend le dit second guide de rayon lumineux (17), soit montée de façon à permettre un mouvement relatif avec le second guide de rayon lumineux (17) suite à une pression sur le couvercle (5), le dit mouvement relatif se faisant selon un axe longitudinal entre la source de lumière (13) et le second guide de rayon lumineux (17) de telle façon que soit maintenu l'alignement de la source de lumière (13) et du second guide de rayon lumineux (17).

12. Une installation selon l'une quelconque des revendications 7 à 11, dans laquelle la source de lumière (13) est montée sur la paroi d'un compartiment d'airbag (1).

13. Une installation selon l'une quelconque des revendications 7 à 11, dans laquelle la source de lumière (13) est montée sur le couvercle (5).

14. Une installation selon l'une quelconque des revendications 7 à 11 dans laquelle la source de lumière (13) est montée sur le volant (18).

15. Une installation selon l'une quelconque des revendications 7 à 14, dans laquelle le second guide de rayon lumineux (17) est monté sur le boîtier (1).

16. Une installation selon l'une quelconque des revendications 7 à 14, dans laquelle la seconde source de lumière (17) est montée sur le couvercle (5).

17. Une installation selon l'une quelconque des revendications 7 à 14, dans laquelle le second guide de rayon lumineux (17) est monté sur le volant (18).

18. Une installation selon l'une quelconque des revendications précédentes, dans laquelle l'installation comprend également un système de diffusion configuré pour diffuser le reflet de la (13) de telle façon que la lumière pénètre la zone située immédiatement derrière le écran rétro-éclairé (10) de façon diffuse.

19. Une installation selon la revendication 18, dans laquelle le système de diffusion comprend un réflecteur de diffusion situé en dessous de l'écran rétro-éclairé (10) orienté de telle façon qu'elle réfléchisse la lumière dans la zone située immédiatement derrière l' écran rétro-éclairé (10).

20. Une installation selon l'une quelconque des revendications précédentes, dans laquelle l'écran rétro-éclairé (10) se présente sous la forme d'un emblème, d'un logo ou d'une marque en plastique translucide incorporant une mince couche d'ions métalliques translucides.
